# EUROPEAN PATENT APPLICATION

(11) **EP 3 300 290 A1**
(43) Date of publication of application: **28.03.2018**
(21) Application number: 16795778.6
(22) Date of filing: 21.04.2016
(51) Int. Cl.: H04L 7/08, H04B 1/707

(54) **FRAME HEADER DETECTION METHOD AND DEVICE**

(30) Priority: 21.05.2015 CN 201510262089
(71) Applicant: ZTE Corporation, Shenzhen, Guangdong 518057 (CN)
(72) Inventor: SHI, Xueming, Shenzhen Guangdong 518057 (CN)
(74) Representative: Studio Torta S.p.A.
(86) International application number: PCT/CN2016/079914
(87) International publication number: WO 2016/184291

(57) **Abstract**

Disclosed is a frame header detection method, comprising: receiving a data stream of frame data, and caching the received data according to the length of M bits, so that groups of bit sequences, with each group having a length of M bits, are obtained, where M is less than the length of the frame data and greater than or equal to the length of a frame header; after a group of bit sequences are received each time, performing a correlation operation on a pre-stored frame header sequence and corresponding data in a sliding window of current serial data; and detecting the frame header according to a result of the correlation operation, wherein before the frame header is detected, after a data stream with the length of one frame is received each time, the sliding window slides one bit, and after the frame header is detected, the sliding window stops sliding. In the method, a frame header is detected by comparing data received after sliding and shifting are performed with a frame header sequence to realize frame alignment, so that the caching of a great deal of data and frequent sliding searches are avoided, and related processing resources are saved.

## Description

### TECHNICAL FIELD

The present invention relates to, but is not limited to, dense wavelength division multiplexing (DWDM) high speed optical transmission systems, and in particular, to a frame header detection method and device.

### BACKGROUND

In a communication system, data transmission and data reception are not synchronized due to the delay of a transmission/reception device, the dispersion of a channel, signal processing, and the like. To achieve data synchronization, data is to be sent in units of frames at the sending end, the frame structure including header, pilot sequence and data; frame header detection, framing, frame header and pilot sequence deletion are to be performed at the receiving end.

For DWDM high speed optical transmission systems used on the backbone network to carry large-capacity data transmissions, such as a 100G polarization-multiplexed quadrature phase shift keying (PM-QPSK) system, the design of coherent receiver also requires frame alignment. In addition to the influences of channels and devices, data caching, value interpolation and deletion in digital signal processing (DSP) also affect the position of the frame header. In addition, there is a skew (clock offset) between polarization states, and the position of the frame head of each polarization state is not the same. Therefore, frame alignment requires strict design and good stability, and as long as framing is successful, data is directly transmitted. Therefore, frame alignment is an indispensable key module in a receiver, and directly determines whether the system is normal.

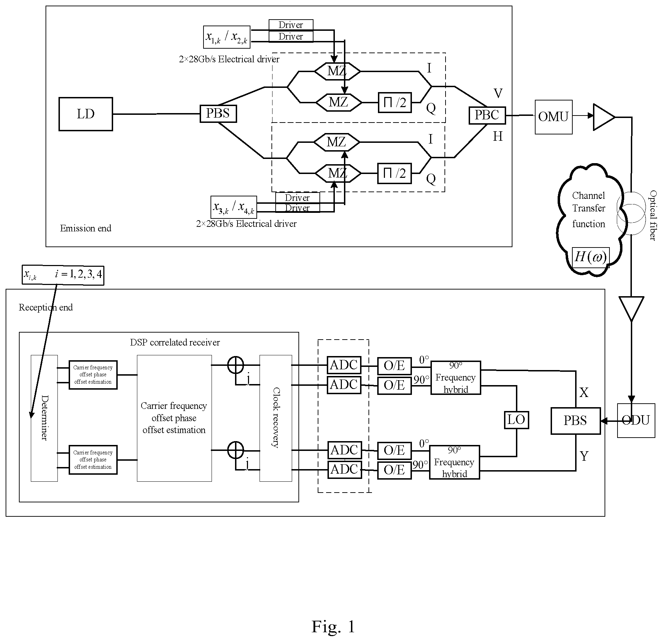

The structure of a 100G PM-QPSK optical transmission system is as shown in Fig. 1. The light emitted by a laser diode (LD) at the light emission end is split by a polarization beam splitter (PBS) into two polarized light beams, the two polarized light beams and electrical signals, which are amplified from digital signals by electrical drivers, are subject to a Mach-Zehnder (MZ) modulation to obtain two sets of orthogonal signals, the two sets of orthogonal signals pass through a polarization beam combiner (PBC) to obtain a polarization-multiplexed optical signal, the optical signal passes through an optical multiplexing unit (OMU) and reaches the light reception end via a channel. After the optical signal of an optical data unit (ODU) is received by a coherent receiver, it is split by a polarization beam splitter (PBS) into two paths of polarized light beams which, together with optical signals emitted by a local oscillator (LO), are demodulated, experience 90-degree frequency hybrid, optical/electrical (O/E) conversion and analog-to-digital converter (ADC) collection to obtain four paths of digital signals on which digital signal processing is performed. The signals enter a DSP, subject to dispersion compensation. A clock recovery processing is performed on the data of which dispersion has been eliminated. The residual dispersion and the polarization mode dispersion are eliminated through adaptive balancing, and two polarization states are subject to polarization demultiplexing. As frequency deviation exists between the local oscillator and the laser diode and the laser itself has a line width, it is necessary to perform frequency offset compensation and phase offset compensation on data. Constellation points can be recovered as normal for data on which a DSP balance compensation has been performed, so the data on which a balanced compensation has been performed enters a frame alignment subsystem for frame alignment.

For the frame alignment method in the receiver, an entire frame data scanning method or partial data scanning method is generally used. However, the entire frame data scanning method requires pre-storing the entire frames of data, while the huge amount of data to store will occupy a lot of storage resources, especially for application specific integrated circuit (ASIC) systems; also, the partial data scanning method will lead to an increase in logical resources.

### SUMMARY

The following is an overview of the subject matter described in detail herein. This overview is not intended to limit the scope of the claims.

Provided in the embodiments of the invention are a frame header detection method and device, which detect a frame header by correlation comparing data received after sliding and shifting are performed to a frame header sequence to realize frame alignment, so that the caching of a great deal of data and frequent sliding searches are avoided, and related processing resources are saved.

Provided in the embodiments of the invention is a frame header detection method, including: Receiving a data stream of frame data, and caching the received data according to the length of M bits, so that groups of bit sequences, with each group having a length of M bits, are obtained, wherein, when the N^{th} group of bit sequences are being received, the cached N-2^{nd} group of bit sequences are discarded, where N is greater than or equal to 3, where M is less than the length of the frame data and greater than or equal to the length of a frame header; After a group of bit sequences are received each time, performing a correlation operation on a pre-stored frame header sequence and corresponding data in a sliding window of current serial data, wherein the current serial data has been obtained by splicing the previous group of bit sequences with the currently received bit sequence; and

Detecting the frame header according to the result of the correlation operation, wherein the sliding window slides one bit before the frame header is detected and after a data stream having a length of one frame is received each time, and stops sliding after the frame header is detected.

Wherein the length of the frame data is greater than 2M.

Wherein receiving a data stream of frame data includes: receiving the frame data from M parallel processing branches, and performing a parallel-to-serial transformation on the received data on each branch to obtain a data stream of the frame data.

Wherein receiving a data stream of frame data and caching the received data according to the length of M bits includes: receiving the first branch of the frame data and caching same according to the length of M bits.

After the frame header is detected, the method further includes: performing a framing processing on the second branch of the data stream of the frame data according to the position of the frame header, the first branch and the second branch being two branches of the same data stream.

Wherein detecting the frame header according to the result of the correlation operation includes:
If the result indicates that the data in the pre-stored frame header sequence and the corresponding data in the sliding window have the same data of which the amount is greater than a preset threshold value A, making a determination that a frame header is detected in the current sliding window;
If the result indicates that the data in the pre-stored frame header sequence and the corresponding data in the sliding window have the same data of which the amount is less than or equal to the preset threshold value A, making a determination that no frame header is detected in the current sliding window.

Wherein the frame data is frame data of a 100G PM-QPSK optical transmission system. Provided in the embodiments of the invention is a frame header detection device, including:
A reception module configured to receive a data stream of frame data, and cache the received data according to the length of M bits, so that groups of bit sequences, with each group having a length of M bits, are obtained, wherein, when the N^{th} group of bit sequences are being received, the cached N-2^{nd} group of bit sequences are discarded, where N is greater than or equal to 3, where M is less than the length of the frame data and greater than or equal to the length of a frame header;
An operation module configured to perform, after a group of bit sequences are received each time, a correlation operation on a pre-stored frame header sequence and corresponding data in a sliding window of current serial data, wherein the current serial data has been obtained by splicing the previous group of bit sequences with the currently received bit sequence; and
A detection module configured to detect the frame header according to the result of the correlation operation, wherein the sliding window slides one bit before the frame header is detected and after a data stream having a length of one frame is received each time, and stops sliding after the frame header is detected.

Wherein the length of the frame data in the reception module is greater than 2M.

Wherein the reception module is configured to receive a data stream of frame data in the following way: receiving the frame data from M parallel processing branches, and performing a parallel-to-serial transformation on the received data on each branch to obtain a data stream of the frame data.

Wherein the reception module is configured to receive a data stream of frame data and cache the received data according to the length of M bits in the following way: receiving the first branch of the frame data and caching same according to the length of M bits.

The device further includes a framing module configured to, after the frame header is detected, perform a framing processing on the second branch of the data stream of the frame data according to the position of the frame header, the first branch and the second branch being two branches of the same data stream.

Wherein the detection module is configured to:
If the result indicates that the data in the pre-stored frame header sequence and the corresponding data in the sliding window have the same data of which the amount is greater than a preset threshold value A, make a determination that a frame header is detected in the current sliding window;
If the result indicates that the data in the pre-stored frame header sequence and the corresponding data in the sliding window have the same data of which the amount is less than or equal to the preset threshold value A, make a determination that no frame header is detected in the current sliding window.
Wherein the frame data in the reception module is frame data of a 100G PM-QPSK optical transmission system.

In addition, further provided in the embodiments of the present invention is a computer-readable storage medium storing computer-executable instructions which when executed implement the above-described frame header detection method.

The above-described technical solutions of the embodiments of the present invention have at least the following advantageous effects:
The frame header detection method of the embodiments of the invention caches a data stream of frame data according to a certain length, so that groups of bit sequences of a certain length are obtained, splices the previous group of bit sequences with the current bit sequence to obtain current serial data, discards the previously cached bit sequence, performs a correlation operation on a pre-stored frame header sequence and corresponding data in a sliding window of the current serial data. A frame header is detected by correlation comparing data received after sliding and shifting to a frame header sequence to realize frame alignment, so that the caching of a great deal of data and frequent sliding searches are avoided, and related processing resources are saved.

After reading and understanding the drawings and detailed description, other aspects can be understood.

### BRIEF DESCRIPTION OF THE DRAWINGS

Fig. 1 shows a structural diagram of a 100G PM-QPSK optical transmission system in the related art;
Fig. 2 shows a schematic flow chart of a frame header detection method according to an embodiment of the present invention;
Fig. 3 shows a schematic diagram related to the sliding of a frame header detection position in the frame header detection method according to the embodiment of the present invention;
Fig. 4 shows a schematic diagram of a branch of a data stream of frame data in the frame header detection method according to the embodiment of the present invention;
Fig. 5 shows a schematic diagram of the overall flow of the frame header detection method according to the embodiment of the present invention;
Fig. 6 shows a schematic diagram of a frame header detection device according to an embodiment of the present invention.

### DETAILED DESCRIPTION

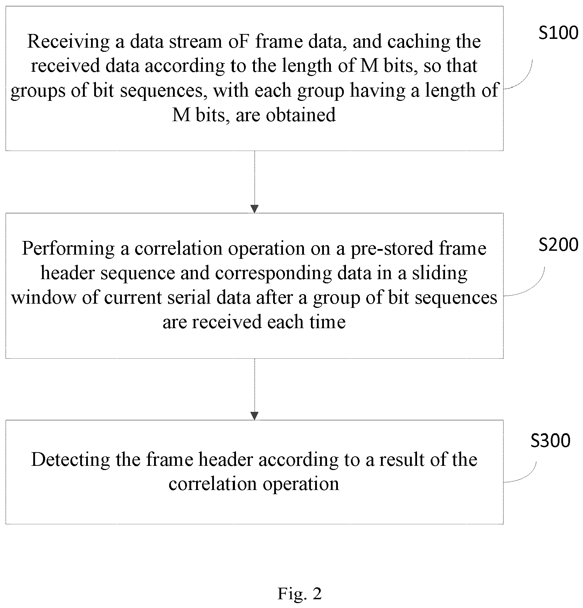

Provided in the embodiment of the present invention is a frame header detection method, as shown in Fig. 2, including:
Step S100, receiving a data stream of frame data, and caching the received data according to the length of M bits, so that groups of bit sequences, with each group having a length of M bits, are obtained, wherein, when the N^{th} group of bit sequences are being received, the cached N-2^{nd} group of bit sequences are discarded, where N is greater than or equal to 3, where M is less than the length of the frame data and greater than or equal to the length of a frame header;
Step S200, after a group of bit sequences are received each time, performing a correlation operation on a pre-stored frame header sequence and corresponding data in a sliding window of current serial data, wherein the current serial data has been obtained by splicing the previous group of bit sequences with the currently received bit sequence, and the length of the data in the sliding window is equal to the length of the frame header; and
Step S300, detecting the frame header according to the result of the correlation operation, wherein the sliding window slides one bit before the frame header is detected and after a data stream having a length of one frame is received each time, and stops sliding after the frame header is detected.

The frame header detection method in the embodiments of the invention can detect a frame header by performing a correlation operation on data and a frame header sequences after sliding and shifting are performed to realize system frame alignment, so that the caching of a great deal of data and frequent sliding searches are avoided, and related processing resources are saved.

The above method will be described in more detail below by way of example.

For example, assuming that the length of the frame header is 64 bits or 32 bits, the data stream of the received frame data can be cached according to the length of 64 bits in this example so that groups of bit sequences, with each group having a length of 64 bits, are obtained. In the reception process, when the third group of bit sequences are being received, the cached first group of bit sequences can be discarded, and when the fourth group of bit sequences are being received, the cached second group of bit sequences can be discarded, wherein the length of the bit sequence is less than the length of the frame data.

The following two cases are analyzed.

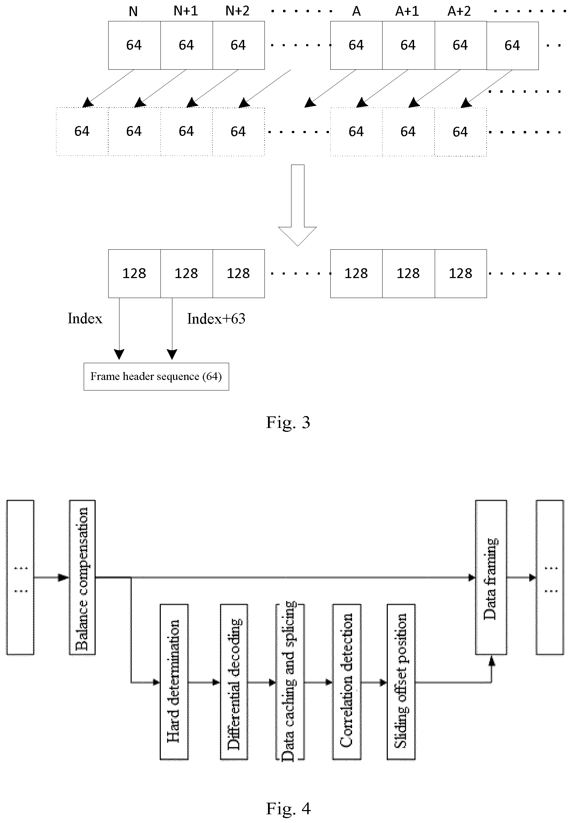

When the length of the frame header is 64 bits:
As shown in Fig. 3, after a group of bit sequences of 64 bits are received, the previous group of bit sequences of 64 bits is spliced with the currently received bit sequences of 64 bits to obtain current serial data of 128 bits. A correlation operation is performed on data of 64 bits in a sliding window of the current serial data of 128 bits and data of 64 bits of a pre-stored frame header sequence, to detect the frame header. It is noted that the length of data within the sliding window is equal to the length of the frame header. Before a frame header is detected, the sliding window slides one bit from the current position in the current serial data after a data stream having a length of one frame is received each time.

For example, assuming that the current sliding window (identified by an index) is initially positioned from the first bit to the 64th bit of the current serial data, a correlation operation is performed on the pre-stored frame header sequence and the data in the sliding window. If the result of the correlation operation indicates that no frame header is detected, a correlation operation is performed again with respect to the next serial data upon the arrival of the next serial data. Wherein, if the length of the data received reaches the length of one frame upon the arrival of the next serial data, the sliding window is moved by one bit, i.e., the sliding window is positioned from the second bit to the 65^{th} bit of the current serial data and the correlation operation is performed, and so on. If the result of the correlation operation indicates that a frame header is detected in the current sliding window, the window stops sliding. It can be seen from the analysis that it is possible to receive data having the length of up to 64 frames before a frame header is detected. That is, the embodiment of the present invention can detect a frame header within M frames.

When the length of the frame header is 32 bits:
After a group of bit sequences of 64 bits are received, the previous group of bit sequences of 64 bits are spliced with the currently received bit sequences of 64 bits to obtain current serial data of 128 bits. A correlation operation is performed on data of 32 bits in a sliding window of the current serial data of 128 bits and data of 32 bits of a pre-stored frame header sequence, to detect the frame header. Before a frame header is detected, the sliding window slides one bit from the current position in the current serial data after a data stream having a length of one frame is received each time. For example, assuming that the current sliding window is initially positioned from the first bit to the 32nd bit of the current serial data, a correlation operation is performed on the pre-stored frame header sequence and the data in the sliding window. If the result of the correlation operation indicates that no frame header is detected, a correlation operation is performed again with respect to the next serial data upon the arrival of the next serial data. Wherein, if the length of the data received reaches the length of one frame upon the arrival of the next serial data, the sliding window is moved by one bit, i.e., the sliding window is positioned from the second bit to the 33rd bit of the current serial data and the correlation operation is performed, and so on. If the result of the correlation operation indicates that a frame header is detected in the current sliding window, the window stops sliding. It can be seen from the analysis that it is possible to receive data having the length of up to 64 frames before a frame header is detected. That is, the embodiment of the present invention can detect a frame header within M frames.

It should be noted that when the current group of bit sequences is the first group of bit sequences, since there is no previous bit sequence, the current group of bit sequences cannot be spliced with the previous group of bit sequences, and the current group of bit sequences need to be cached to be spliced with next group of bit sequences.

In the above embodiment of the present invention, the length of the frame data in step S100 is an integer multiple of M, preferably greater than 2M, which can be selected according to the actual chip and the application scenario. The smaller the M, the less the required cache resource and processing resource for the correlation operation, the more the time required to detect the frame header (or the length of the received data); otherwise, the larger the M, the more the required cache resource and processing resource for the correlation operation, the less the time required to detect the frame header (or the length of the received data).

In the above embodiment of the present invention, when a data stream of the frame data is received, the soft data stream of two polarization states are obtained, and it is necessary to perform frame header detection on the soft data stream of each polarization state. As the frame header detection method and relevant processing are consistent for the data stream of the two polarization states, the relevant processing and the frame header detection will be described in the solution for the soft data stream of one polarization state only.

The received data stream is a soft data stream of a polarization state. Before the data stream is cached, it is also necessary to make a hard determination on the data stream to get a binary bit stream, wherein each data stream includes two paths I and Q of data. Making a hard determination on the data stream includes:
making a determination on the I and Q paths of data respectively: if the data of a certain bit in the I and the Q paths of data is greater than or equal to 0, it is determined that the bit value is 0; if the data of a certain bit in the I and the Q paths of data is less than 0, it is determined that the bit value is 1, and the two paths of bit streams are obtained;
performing differential decoding on the I and Q paths of bit streams in the data stream after the hard determination, the resulting data not having a frequency offset or phase offset blurred.

In the above embodiment of the present invention, receiving the data stream of the frame data in step S100 includes: receiving the frame data from M parallel processing branches, performing a parallel-to-serial conversion on the received data on each branch to obtain the data stream of the frame data.

Alternatively, a DSP chip may be used to provide the M parallel data processing branches, and then a parallel-to-serial conversion is performed on the received data on each branch to obtain the serial data stream, thereafter the abovementioned processing procedure of the embodiment of the present invention may be performed on the serial data stream to perform frame head alignment.

In the above embodiment of the present invention, in step S100, receiving a data stream of frame data and cache the received data according to the length of M bits is to receive the first branch of the frame data and cache same according to the length of M bits.

After the frame header is detected, the method further includes: performing a framing processing on the second branch of the data stream of the frame data according to the position of the frame header, the first branch and the second branch being two branches of the same data stream.

As shown in Fig. 4, the data stream after DSP balance compensation is divided into two branches. First, a hard determination and a differential decoding are performed on the first branch of the data stream of frame data. And then the received data are cached according to the length of M bits, thereafter the splice processing and the relevant detection are performed, and the frame header is detected after the position slides and is shifted. After the frame header is detected, the second branch of the data stream located at the same frame data with the first branch is framed.

In the above embodiment of the present invention, in step S200, performing a correlation operation on a pre-stored frame header sequence and corresponding data in a sliding window of current serial data, includes:
comparing the data in the pre-stored frame header sequence to the corresponding data in the sliding window one-to-one.

Wherein the sliding window is positioned in a certain area of the current serial data and then the data in the sliding window is compared to the data in the pre-stored frame header sequence. Since the data in the sliding window and the data in the pre-stored frame header sequence have the same number of bits, the data in the sliding window is compared to the data in the pre-stored frame header sequence one-to-one, and a correlation operation is performed.

In the above-described embodiment of the present invention, in step S300, detecting the frame header according to the result of the correlation operation, includes:
If the result indicates that the data in the pre-stored frame header sequence and the corresponding data in the sliding window have the same data of which the amount is greater than a preset threshold value A, making a determination that a frame header is detected in the current sliding window;
If the result indicates that the data in the pre-stored frame header sequence and the corresponding data in the sliding window have the same data of which the amount is less than or equal to the preset threshold value A, making a determination that no frame header is detected in the current sliding window.

Wherein when the data in the sliding window is compared to the data in the pre-stored frame header sequence one by one, if both have the same data of which the amount is larger than a preset threshold value, it indicates that the frame header is detected; if both have the same data of which the amount is less than or equal to the preset threshold value, it indicates that the frame header has not been detected and needs to be detected continuously. When the data having a length of one frame is received again, the sliding window slides one bit and the correlation operation is performed.

In the above embodiment of the present invention, the frame data is frame data of a 100G PM-QPSK optical transmission system.

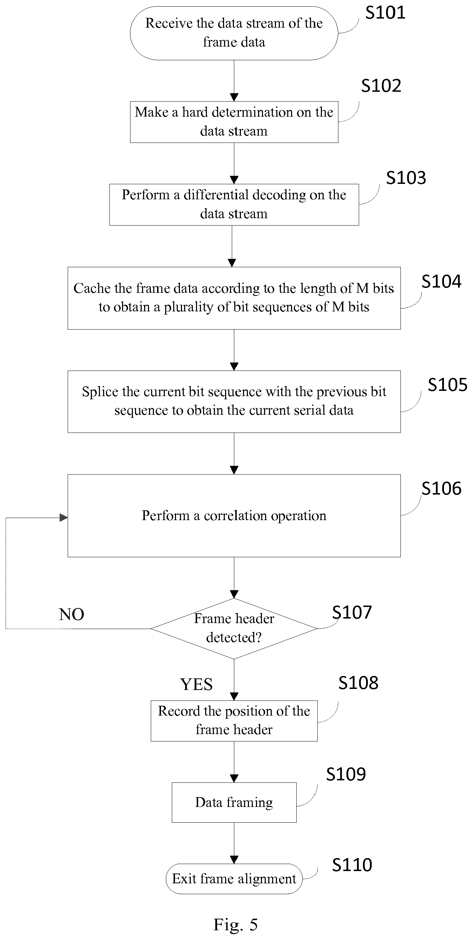

The overall flow of the embodiment of the present invention is shown in Fig. 5:
Step S101, receiving the data stream of the frame data.
Step S102, making a hard determination on the data stream. Since the received data stream is a soft data stream of a polarization state, it is also necessary to perform a hard determination on the data stream to obtain a binary bit stream. During the hard determination, a determination is made on the I and Q paths of data included in each data stream.
Step S103, performing a differential decoding on the data stream after the hard determination. The data after the differential decoding does not have frequency offset or phrase offset blurred.
Step S104, caching the frame data according to the length of M bits to obtain a plurality of bit sequences of M bits.
Step S105, splicing the current bit sequence with the previous bit sequence to obtain the current serial data.
Step S106, performing a correlation operation. A correlation operation is performed on the pre-stored frame header sequence and the corresponding data in the sliding window in the current serial data. Before the frame header is detected, the sliding window slides one bit after a data stream having a length of one frame is received each time, and the sliding window stops sliding after the frame head is detected.
Step S107, determining whether or not the frame header is detected: if the frame header is detected, proceed to the next step S108; if it is not detected, it is necessary to return to step S106 to perform the correlation operation.
Step S108, recording the position of the frame header.
Step S109, framing the data.
Step S110, exiting the frame alignment, and the process ends.

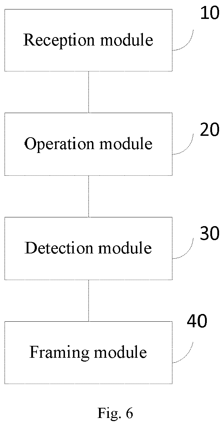

Provided in the embodiments of the invention is a frame header detection device, as shown in Fig. 6, including:
A reception module 10 configured to: receive a data stream of frame data, and cache the received data according to the length of M bits, so that groups of bit sequences, with each group having a length of M bits, are obtained, wherein, when the N^{th} group of bit sequences are being received, the cached N-2^{nd} group of bit sequences are discarded, where N is greater than or equal to 3, where M is less than the length of the frame data and greater than or equal to the length of a frame header;
An operation module 20 configured to: perform, after a group of bit sequences are received each time, a correlation operation on a pre-stored frame header sequence and corresponding data in a sliding window of current serial data, wherein the current serial data has been obtained by splicing the previous group of bit sequences with the currently received bit sequence, the length of the data in the sliding window being equal to the length of the frame header; and
A detection module 30 configured to: detect the frame header according to the result of the correlation operation, wherein the sliding window slides one bit before the frame header is detected and after a data stream having a length of one frame is received each time, and stops sliding after the frame header is detected.

In the embodiment of the present invention, the length of the frame data in the reception module 10 is greater than 2M.

In the embodiment of the present invention, the reception module 10 is configured to receive a data stream of frame data in the following way: receiving the frame data from M parallel processing branches, and performing a parallel-to-serial transformation on the received data on each branch to obtain a data stream of the frame data.

In the embodiment of the present invention, the reception module 10 is configured to receive a data stream of frame data and cache the received data stream according to the length of M bits in the following way: receiving the first branch of the frame data and caching same according to the length of M bits.

As shown in Fig. 6, the device further includes a framing module 40 configured to, after the frame header is detected by the detection module 30, perform a framing processing on the second branch of the data stream of the frame data according to the position of the frame header, the first branch and the second branch being two branches of the same data stream. In the embodiment of the present invention, the detection module 30 is configured to:
If the result indicates that the data in the pre-stored frame header sequence and the corresponding data in the sliding window have the same data of which the amount is greater than a preset threshold value A, make a determination that a frame header is detected in the current sliding window;
If the result indicates that the data in the pre-stored frame header sequence and the corresponding data in the sliding window have the same data of which the amount is less than or equal to the preset threshold value A, make a determination that no frame header is not detected in the current sliding window.

In the embodiment of the present invention, the frame data in the reception module 10 is frame data of a 100G PM-QPSK optical transmission system.

The frame header detection method in the embodiments of the invention caches the data stream of the frame data according to a certain length to obtain groups of bit sequences each having a fixed length, splices the previous group of bit sequences with the current bit sequence to obtain the current serial data, discards the previously cached bit sequences, and performs a correlation operation on a pre-stored frame header sequence and the corresponding data of the current serial data in the sliding window. A frame header is detected by correlation comparing the data received after sliding and shifting are performed to the frame header sequence, to realize frame alignment, so that the caching of a great deal of data and frequent sliding searches are avoided, and the relevant processing resources are saved.

It should be noted that the frame header detection device in the embodiments of the invention uses the abovementioned device, and then all the embodiments of the method are applicable to the device and can achieve the same or similar advantageous effects.

In addition, further provided in the embodiments of the present invention is a computer-readable storage medium storing computer-executable instructions which when executed implement the above-described frame header detection method.

It will be understood by those of ordinary skill in the art that all or part of the steps in the method described above may be accomplished by relevant hardware (e.g., a processor) commanded by a program, and the program may be stored in a computer readable storage medium, such as a read only memory, magnetic disk, or an optical disc. Alternatively, all or part of the steps of the embodiments described above may also be implemented using one or more integrated circuits. Accordingly, the modules/units in the above embodiments may be implemented in the form of hardware, for example, the corresponding functions thereof are implemented by means of an integrated circuit, or may be implemented in the form of a software function module, for example, the corresponding functions thereof are implemented by a processor executing a program/instruction stored in a memory. This application is not limited to any combination of particular forms of hardware and software.

The foregoing is optional embodiments of the present application and it should be noted that it will be apparent to those of ordinary skill in the art that a number of improvements and modifications may be made without departing from the principles set forth herein, which also fall within the scope of the present application.

### Industrial Applicability

According to the frame header detection method and device provided in the embodiments of the invention, a frame header is detected by correlation comparing the data received after sliding and shifting are performed to the frame header sequence, to realize frame alignment, so that the caching of a great deal of data and frequent sliding searches are avoided, and the relevant processing resources are saved.

## Claims

1. A frame header detection method, comprising:
receiving a data stream of frame data, and caching the received data according to the length of M bits, so that groups of bit sequences, with each group having a length of M bits, are obtained, wherein, when the Nth group of bit sequences are being received, the cached N-2nd group of bit sequences are discarded, where N is greater than or equal to 3, where M is less than the length of the frame data and greater than or equal to the length of a frame header;
after a group of bit sequences are received each time, performing a correlation operation on a pre-stored frame header sequence and corresponding data in a sliding window of current serial data, wherein the current serial data has been obtained by splicing the previous group of bit sequences with the currently received bit sequence; and
detecting the frame header according to the result of the correlation operation, wherein the sliding window slides one bit before the frame header is detected and after a data stream having a length of one frame is received each time, and stops sliding after the frame header is detected.

2. The frame header detection method according to claim 1, wherein the length of the frame data is greater than 2M.

3. The frame header detection method according to claim 1, wherein receiving a data stream of frame data comprises: receiving the frame data from M parallel processing branches, and performing a parallel-to-serial transformation on the received data on each branch to obtain a data stream of the frame data.

4. The frame header detection method according to claim 1, wherein,
receiving a data stream of frame data and caching the received data according to the length of M bits comprises: receiving the first branch of the frame data and caching same according to the length of M bits;
after the frame header is detected, the method further comprises: performing a framing processing on the second branch of the data stream of the frame data according to the position of the frame header, the first branch and the second branch being two branches of the same data stream.

5. The frame header detection method according to claim 1, wherein, detecting the frame header according to the result of the correlation operation comprises:
if the result indicates that the data in the pre-stored frame header sequence and the corresponding data in the sliding window have the same data of which the amount is greater than a preset threshold value A, making a determination that a frame header is detected in the current sliding window;
if the result indicates that the data in the pre-stored frame header sequence and the corresponding data in the sliding window have the same data of which the amount is less than or equal to the preset threshold value A, making a determination that no frame header is detected in the current sliding window.

6. The frame alignment method according to claim 1, wherein, the frame data is frame data of a 100G polarization-multiplexed quadrature phase shift keying (PM-QPSK) optical transmission system.

7. A frame header detection device, comprising:
a reception module configured to receive a data stream of frame data, and cache the received data according to the length of M bits, so that groups of bit sequences, with each group having a length of M bits, are obtained, wherein, when the Nth group of bit sequences are being received, the cached N-2nd group of bit sequences are discarded, where N is greater than or equal to 3, where M is less than the length of the frame data and greater than or equal to the length of a frame header;
an operation module configured to perform, after a group of bit sequences are received each time, a correlation operation on a pre-stored frame header sequence and corresponding data in a sliding window of current serial data, wherein the current serial data has been obtained by splicing the previous group of bit sequences with the currently received bit sequence; and
a detection module configured to detect the frame header according to the result of the correlation operation, wherein the sliding window slides one bit before the frame header is detected and after a data stream having a length of one frame is received each time, and stops sliding after the frame header is detected.

8. The frame header detection device according to claim 7, wherein, the length of the frame data in the reception module is greater than 2M.

9. The frame header detection device according to claim 7, wherein, the reception module is configured to receive a data stream of frame data in the following way: receiving the frame data from M parallel processing branches, and performing a parallel-to-serial transformation on the received data on each branch to obtain a data stream of the frame data.

10. The frame header detection device according to claim 7, wherein,
the reception module is configured to receive a data stream of frame data and cache the received data according to the length of M bits in the following way: receiving the first branch of the frame data and caching same according to the length of M bits;
the device further comprises a framing module configured to, after the frame header is detected, perform a framing processing on the second branch of the data stream of the frame data according to the position of the frame header, the first branch and the second branch being two branches of the same data stream.

11. The frame header detection device according to claim 7, wherein, the detection module is configured to:
if the result indicates that the data in the pre-stored frame header sequence and the corresponding data in the sliding window have the same data of which the amount is greater than a preset threshold value A, make a determination that a frame header is detected in the current sliding window;
if the result indicates that the data in the pre-stored frame header sequence and the corresponding data in the sliding window have the same data of which the amount is less than or equal to the preset threshold value A, make a determination that no frame header is detected in the current sliding window.

12. The frame alignment device according to claim 7, wherein, the frame data in the reception module is frame data of a 100G polarization-multiplexed quadrature phase shift keying (PM-QPSK) optical transmission system.
